# EUROPÄISCHE PATENTSCHRIFT

(11) **EP 4 112 446 B1**
(45) Veröffentlichungstag und Bekanntmachung des Hinweises auf die Patenterteilung: **27.08.2025**
(21) Anmeldenummer: 21182209.3
(22) Anmeldetag: 28.06.2021
(51) Int. Cl.: B64C 1/14

(54) **ABFLUSSMAST**
DRAIN MAST
MÂT DE DRAINAGE

(43) Veröffentlichungstag der Anmeldung: 04.01.2023
(73) Patentinhaber: Airbus Operations GmbH, 21129 Hamburg (DE)
(72) Erfinder: Rempe, Michael, 21129 Hamburg (DE); Schneider, Frank, 21129 Hamburg (DE); Lübbert, Tim, 21129 Hamburg (DE)
(74) Vertreter: Bird & Bird LLP - Hamburg

(56) Entgegenhaltungen:
- EP-A1- 0 556 765
- EP-A1- 0 654 402
- EP-A1- 0 672 583
- US-A1- 2015 329 195

## Beschreibung

Die vorliegende Erfindung betrifft einen Abflussmast für ein Flugzeug, mit dem Wasser aus dem Flugzeuginnern abgelassen werden kann. Der Abflussmast umfasst eine Leitung, die sich einer Leitungsrichtung von einem Anschlussende zu einem Ablassende erstreckt. Das Anschlussende ist zur Verbindung mit einer weiteren Leitung im Innern des Flugzeugs vorgesehen, durch die Wasser in die Leitung des Abflussmasts einströmt. Das Ablassende ist zum Ablassen des Wassers in eine Umgebung des Flugzeugs vorgesehen.

Abflussmasten, die auch als Drain Mast bezeichnet werden, werden verwendet, um Grauwasser aus den Waschbecken von Waschräumen und Bordküchen, sog. Galleys, aus dem Flugzeug abzulassen. Abflussmasten sind in US 2015/329195 A1 und EP 0 556 765 A1 beschrieben.
Die Abflussmasten gehen direkt nach außenbords, also in die Umgebung des Flugzeugs. Damit es nicht zu Verschmutzungen der Flugzeugaußenhaut durch verschmutztes Grauwasser kommt, sind die Auslassenden der Abflussmasten nicht direkt in die Außenhaut des Flugzeugs eingelassen, sondern ragen aus dieser hervor und sind mit einer aerodynamischen Verkleidung, einem Fairing, versehen.

Während des Fluges sinkt die Temperatur am Ablassende oder äußeren Ende des Abflussmasts auf die Umgebungstemperatur ab. Diese kann beispielsweise auf einer Reiseflughöhe von 10.000 m bis zu -70 °C betragen. Bei solchen Temperaturen ist es nicht möglich, Wasser einfach durch den Abflussmast ablaufen zu lassen, da das Wasser sofort gefrieren und damit den Abfluss, d.h., die Leitung im Abflussmast, zusetzen würde. Es ist daher bekannt, Abflussmasten zu beheizen. Hierzu werden die Leitungen der Abflussmasten, die beispielsweise aus rostfreiem Stahl gefertigt sind, mit Heizfolien und einer darüberliegenden Schicht aus einem Isoliermaterial versehen, so dass die Leitung beheizt werden kann. Da die Heizfolien nicht bis an das Abflussende heran verbaut werden können, wir dieses beispielsweise mit einem Kupferkragen versehen, der über die metallische Leitung übertragene Wärme aufnimmt.

Aus der US 2015/329195 A1 ist ein Ablassmast zum Ablassen von Flüssigkeiten aus einem Flugzeug bekannt. Dieser Ablassmast umfasst eine Verkleidung mit einer Basis, die einen stromaufwärts gelegenen Abschnitt, der an einer Außenfläche des Flugzeugs angebracht werden soll, und einen stromabwärts gelegenen Abschnitt aufweist. Aus der EP 0 556 765 A1 ist eine modulare Drainmastbaugruppe für ein Flugzeug bekannt, die eine Drainrohrbaugruppe umfasst, die abnehmbar in einer Verkleidung eingeschlossen ist, die abnehmbar an einem Flugzeug angebracht werden kann.

Vor diesem Hintergrund stellt sich dem Fachmann die Aufgabe, einen verbesserten Abflussmast bereitzustellen.

Diese Aufgabe wird gelöst durch den Abflussmast nach Anspruch 1. Bevorzugte Ausgestaltungen sind in den abhängigen Ansprüchen angegeben.

Die Erfindung betrifft in einem ersten Aspekt einen Abflussmast für ein Flugzeug zum Ablassen von Wasser aus dem Flugzeuginnern mit einer Leitung, die sich in einer Leitungsrichtung von einem Anschlussende zu einem Ablassende erstreckt. Das Anschlussende ist zur Verbindung mit einer weiteren Leitung des Flugzeugs vorgesehen, durch die Wasser in den Abflussmast einströmt. Das Ablassende ist zum Ablassen des Wassers in eine Umgebung des Flugzeugs vorgesehen. Die Leitung weist einen Kunststoff auf, in den ein elektrisch leitfähiges Material eingebettet ist, mittels dessen die Leitung elektrisch beheizt werden kann, indem ein Heizstrom durch das leitfähige Material geleitet wird. Ein Anteil des eingebetteten leitfähigen Materials in der Leitung nimmt in Leitungsrichtung pro Längeneinheit vom Anschlussende der Leitung zum Abflussende hin derart zu, dass die in die Leitung eingebrachte Heizleistung pro Längeneinheit vom Anschlussende zum Ablassende hin zunimmt.

Mit anderen Worten ist ein Abflussmast vorgesehen, mit dem Wasser und insbesondere Grauwasser aus den Waschbecken eines Flugzeugs aus dem Flugzeug abgeleitet werden kann. Der Abflussmast kann beispielsweise dazu verwendet werden, während des Fluges Wasser aus den Waschbecken in den Küchen und Waschräumen des Flugzeugs aus dem Flugzeug heraus zu leiten, so dass dieses nicht weiter transportiert werden muss.

Das Wasser kann über eine oder mehrere Leitungen durch den Innenraum des Flugzeugs laufen, bevor es beispielsweise an der Außenhaut aus diesen innenliegenden Leitungen über eine Kupplung in die Leitung des Abflussmasts fließt. Der Abflussmast kann mit seinem inneren Anschlussende über eine beispielhafte Kupplung mit einer innenliegenden Leitung verbunden werden. Von dort fließt das Wasser durch die Leitung des Abflussmasts, bevor es am äußeren Abflussende der Leitung an die Umgebung des Flugzeugs abgegeben wird.

Die Leitung des Abflussmasts ist anspruchsgemäß aus einem Kunststoff gebildet, in den ein elektrisch leitfähiges Material zum Beheizen der Leitung eingebettet ist, so dass diese aus einem Stück gebildet sind. Die Leitung kann beispielweise einen kreisförmigen, ovalen oder rechteckigen Querschnitt aufweisen und verläuft zwischen dem inneren Anschlussende und dem äußeren Ablassende in einer Leitungsrichtung. Der Verlauf der Leitung kann einer Gerade folgen oder gekrümmt sein.

Das elektrisch leitfähige Material ist in dem Kunststoffmaterial eingebettet, d.h., es ist zumindest an drei Seiten und vorzugsweise vollständig von dem Kunststoffmaterial umschlossen, aus dem die Leitung gebildet ist. Unter einem Kunststoffmaterial wird vorliegend beispielsweise Polyetherehterketon (PEEK) verstanden, es kann sich aber auch um faserverstärkte Kunststoffe handeln. Beispielsweise kann die Leitung aus einem glasfaserverstärkten Kunststoff gebildet sein.

Bei dem elektrisch leitfähigen Material handelt es sich vorzugsweise um Kohlenstofffasern, die möglicherweise auch zur Verstärkung des Kunststoffs verwendet werden. Da das elektrisch leitfähige Material vollständig in dem Kunststoff der Leitung eingebettet ist, kann kein Wasser zwischen den Leiter und die Leitung eindringen. Damit wird auf vorteilhafte Weise eine Beschädigung des Abflussmasts und konkret der von den elektrischen Leitern gebildeten Heizelemente und der Leitungen durch eindringendes Wasser wie beispielsweise Kondenswasser vermieden, da Leitung und Heizelemente einstückig ausgebildet sind.

In einer alternativ bevorzugten Ausführungsform handelt es sich bei den Heizelementen um ein elektrisch leitfähiges Material mit einem positiven Temperaturkoeffizienten, also ein Material, dessen Widerstand mit sinkender Temperatur abnimmt und mit steigender Temperatur zunimmt. Derartige Materialen können auch als PTC-Materialen bezeichnet werden. Sie haben den Vorteil, dass bei sinkender Umgebungstemperatur die Heizleistung automatisch steigt, da der Leiter zum Halten der Temperatur stärker erwärmt werden muss, bzw. bei steigender Umgebungstemperatur die Heizleistung abfällt, so dass eine selbstregulierende/selbstlimitierende Heizung gebildet wird.

An das leitfähige Material kann ein Strom angelegt werden, um die Leitung zu beheizen. Dieser Strom wird als Heizstrom bezeichnet. Hierzu können beispielsweise zwei oder mehr Anschlüsse vorgesehen sein, an denen das elektrisch leitfähige Material mit einer oder mehreren Strom- oder Spannungsquelle verbunden werden kann.

Die Verteilung des eingebetteten elektrisch leitfähigen Materials innerhalb der Leitung ist nicht gleichmäßig. Vielmehr steigt der Anteil von elektrisch leitfähigem Material pro Längeneinheit vom Anschlussende zum Ablassende hin an, so dass bei gleichem Heizstrom die Heizleistung vom Anschlussende zum Ablassende hin zunimmt. Der Anstieg muss weder stetig noch kontinuierlich sein. Vielmehr wird das elektrisch leitfähige Material auf bevorzugte Weise so verteilt, dass beispielweise im Reiseflug eine konstante Temperatur der Leitung erreicht wird. Die Heizleistung muss somit umgekehrt proportional zum Temperaturverlauf entlang der Leitung bei einer unbeheizten Leitung verlaufen.

Damit wird auf vorteilhafte Weise ein besonders leichter und energieeffizienter Abflussmast bereitgestellt, der nicht aus schwerem Metall, sondern auf einem leichten Kunststoff gebildet ist. Zudem kann durch die eingebetteten elektrischen Leiter ein Heizgerät realisiert werden, dass die Leitung des Abflussmasts zielgenau dort erwärmt, wo die Wärme benötigt wird. Dabei kann die Heizleistung durch den Anteil des leitfähigen Materials in dem Kunststoff der Leitung direkt vom Anschlussende bis hin zum Ablassende angepasst werden. Es ist daher nicht notwendig, die Leitung lokal stärker zu erwärmen als unbedingt notwendig, da anders als bei herkömmlichen Abflussmasten die Heizleistung bis zum Ablassende direkt in die Leitung eingebracht werden kann, während im Stand der Technik aufgrund baulicher Beschränkungen die Heizelemente nur bis in einem gewissen Abstand zum Abflussende auf die Leitung aufgebracht werden konnten und die verbleibenden Abschnitte indirekt unter Mithilfe der Wärmeleitfähigkeit der metallischen Leitung erwärmt werden mussten.

In einer bevorzugten Ausführungsform umfasst der Abflussmast eine aerodynamische Verkleidung mit einer Ablassöffnung, wobei das Ablassende der Leitung in der Ablassöffnung angeordnet ist. Dabei ist es besonders bevorzugt, wenn die aerodynamische Verkleidung und die Leitung einstückig ausgebildet sind. So wird auf bevorzugte Weise verhindert, dass Wasser zwischen die Verkleidung und die Leitung eindringen und einzelne Elemente des Abflussmasten beschädigen kann, da alle Komponenten in einem Stück gefertigt worden sind bzw. die elektrischen Leiter zum Heizen in den Kunststoff eingebettet wurden. Die einstückige Ausgestaltung ermöglicht zudem, die Herstellung stärker zu automatisieren, wodurch Kosten gesenkt und Herstellungsfehler verringert werden können. In einem zweiten Aspekt wird die Aufgabe durch ein Flugzeug mit einem Abflussmast gemäß einer der vorstehend beschriebenen Ausführungsformen gelöst. Die Vorteile des Flugzeugs entsprechen jeweils den Vorteilen des Abflussmasts, der in dem Flugzeug verwendet wird. Nachfolgend wird der Erfindung bezugnehmend auf die Zeichnungen näher beschrieben, darin zeigt
- Figur 1: eine perspektivische Ansicht eines Ausführungsbeispiels einen Abflussmasts,
- Figur 2: einen Querschnitt durch einen Seitenwandung des Ausführungsbeispiels aus Figur 1 entlang der Linie A-A,
- Figur 3: einen Temperaturverlauf eines unbeheizten Abflussmasts bei Reiseflughöhe,
- Figur 4: einen Temperaturverlauf und eine Heizleistung des Ausführungsbeispiels aus den Figuren 1 und 2 bei Reiseflughöhe,
- Figur 5: ein Ausführungsbeispiel eines Abflussmasts mit einer aerodynamischen Verkleidung und
- Figur 6: ein Ausführungsbeispiel eines Flugzeugs.

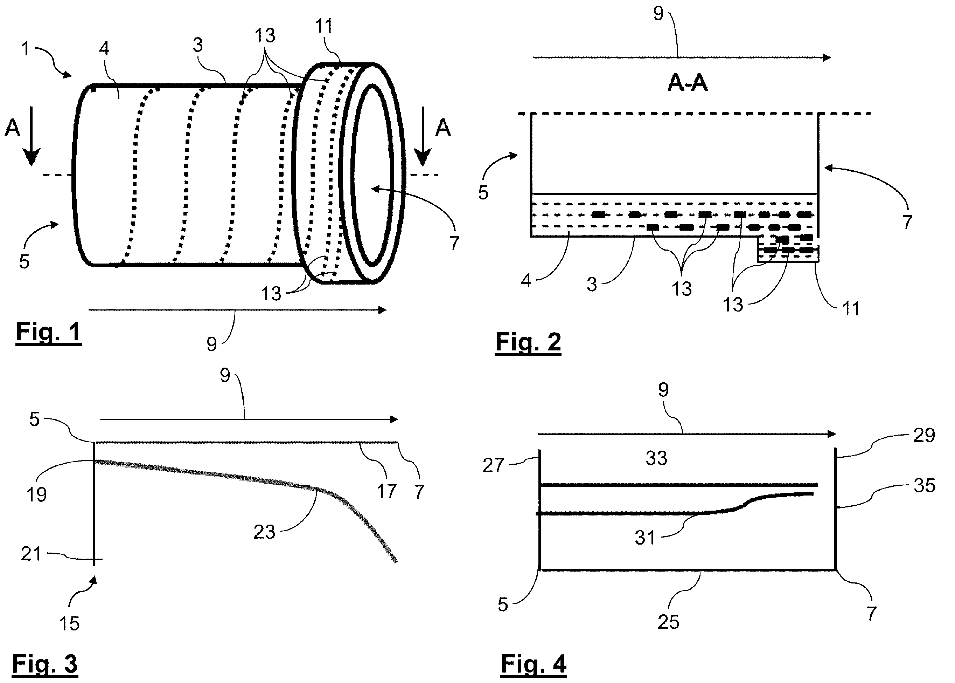

In den Figuren 1 und 2 wird ein Ausführungsbeispiel eines Abflussmasts 1 gezeigt, mit dem Wasser aus einem Flugzeug in die Umgebung des Flugzeugs abgelassen werden kann. Das Wasser ist Grauwasser aus den Spülbecken der Waschräume oder Küchen des Flugzeugs.

Der Abflussmast 1 umfasst einen Leitung 3, die sich zwischen einem inneren Ende oder Anschlussende 5 und einem äußeren Ende oder Ablassende 7 in einer Leitungsrichtung 9 erstreckt. In Figur 2 ist ein Schnitt durch eine Außenwandung 4 der Leitung 3 gezeigt.

In dem Ausführungsbeispiel in Figur 1 hat die Leitung 3 einen ringförmigen Querschnitt senkrecht zur Leitungsrichtung 9 und verläuft im Wesentlichen gerade. Das Anschlussende ist dazu vorgesehen, mit einer weiteren Leitung (nicht dargestellt) verbunden zu werden, aus der das Grauwasser in die Leitung 3 einströmt. Die Verbindung zwischen den Leitungen kann innerhalb des Flugzeugs erfolgen, direkt an der Außenhaut des Flugzeugs oder auch außerhalb des Flugzeugrumpfs, beispielsweise geschützt durch eine aerodynamische Verkleidung (in Figur 1 nicht dargestellt). Durch das Ablassende 7 wird das Grauwasser in die Umgebung des Flugzeugs abgelassen.

In dem Ausführungsbeispiel in Figur 1 weist die Leitung 3 einen Kragen 11 auf, der die Leitung 3 zum Ablassende 7 hin begrenzt und als mechanische Schnittstelle zu einer aerodynamischen Verkleidung (in Figur 1 nicht dargestellt), dem Fairing, dient. Die Leitung 3 ist im Wesentlichen aus einem Kunststoff gebildet, bei dem es sich im vorliegenden Ausführungsbeispiel um einen Kunststoff wie beispielsweise Polyetheretherketon (PEEK) handelt.

Zusätzlich sind in den Kunststoff elektrische Leiter 13 eingebettet, die in Wickelungen um die Leitung 3 verlaufen. Die elektrischen Leiter 13 sind in den Figuren 1 und 2 nur teilweise mit Bezugszeichen versehen, um die Darstellung in den Figuren nicht zu überfrachten. Über die elektrischen Leiter 13 kann die Leitung 3 beheizt werden kann. Wie man insbesondere in Figur 2 erkennen kann, nimmt er Anteil der elektrischen Leiter pro Längeneinheit oder deren Dichte in Leitungsrichtung 9 vom Anschlussende 5 zum Abflussende 7 hin zu, so dass die in die Leitung eingebrachte Heizleistung vom Anschlussende 5 zum Abflussende 7 hin ebenfalls zunimmt. Die Leitung 3 und das von dem elektrischen Leiter 13, der auch mehrteilig sein kann, gebildete Heizelement sind einstückig ausgebildet, so dass die Heizelemente durch das Leitungsmaterial vor Feuchtigkeit geschützt werden und keine Feuchtigkeit zwischen das Heizelement und die Leitung 3 gelangen kann. Hierdurch werden die Leitung 3 und das leitfähige Material 13 vor Beschädigung, beispielsweise durch Korrosion, geschützt.

In Figur 3 ist ein beispielhafter schematischer Temperaturverlauf entlang der Leitung 3 gezeigt, der sich auf Reiseflughöhe von 10.000 m in einem unbeheizten Abflussmast 1 einstellen würde. In Figur 3 ist auf der Ordinate 15 die Temperatur eingetragen und auf der Abszisse 17 die Länge der Leitung 3 vom Anschlussende 5 zum Ablassende 7. Die Kurve 23 zeigt schematisch den Verlauf der Temperatur, der am Anschlussende 5 ca. -15 °C beträgt und bis zum Ablassende auf ca. -70 °C abfällt, wobei der Abfall nichtlinear verläuft.

Figur 4 zeigt den Temperaturverlauf der Leitung 3 aus dem Ausführungsbeispiel der Figuren 1 und 2, wenn diese mittels der elektrischen Leiter 13 beheizt wird. Hier ist auf der Abszisse 25 wiederum die Länge der Leitung 3 vom Anschlussende 5 zum Ablassende 7 aufgetragen, während die linke Ordinate 27 die in die Leitung eingebrachte Heizleistung darstellt und die rechte Ordinate 29 die Temperatur 29. Die Kurve 31 zeigt den Verlauf der Heizleistung entlang der Leitung 3, währen die Kurve 33 den Verlauf der Temperatur in der Leitung 3 bei eingeschalteter Heizung zeigt. Wie man in Figur 4 unmittelbar erkennt, nimmt die in die Leitung 3 eingebrachte Heizleistung 31 vom Anschlussende 5 zum Ablassende 7 hin zu, während die Temperatur 33 auf vorteilhafte Weise im Wesentlichen konstant und insbesondere oberhalb der auf der rechten Ordinate mit dem Bezugszeichen 35 markierten Temperatur von 0 °C bleibt. Dies wird auf vorteilhafte Weise durch die in der Leitungswandung eingebetteten elektrischen Leiter 13 erreicht, deren Anteil pro Längeneinheit von Anschlussende 5 zum Ablassende 7 hin kontinuierlich zunimmt. Auf diese Weise kann ein Abflussmast 1 bereitgestellt werden, der gleichmäßig und damit energieeffizient beheizt wird. Zudem werden die Leitung 3 und die darin eingebetteten elektrischen Leiter 13 aus einem Stück gefertigt, so dass kein Wasser zwischen die von den elektrischen Leitern bzw. dem leitfähigen Material 13 gebildeten Heizelemente und die Leitung 3 eindringen und den Abflussmast 1 beschädigen kann.

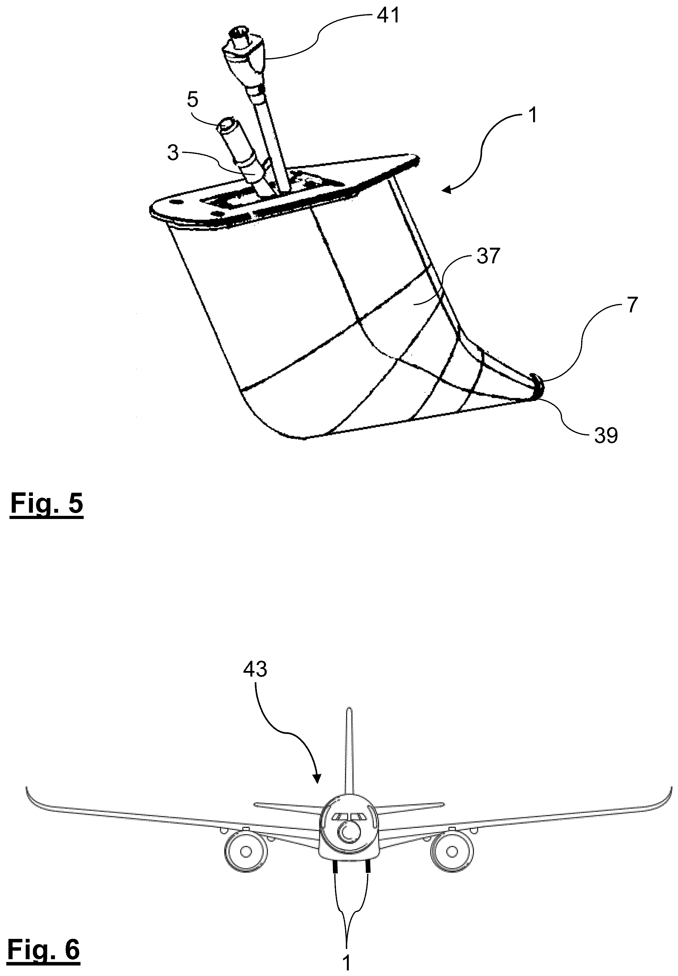

Figur 5 zeigt ein zweites Ausführungsbeispiel eines Abflussmasts 1, bei dem die Leitung 3 in einer aerodynamische Verkleidung 37 eingebettet ist. Von der Leitung 3 ist vornehmlich das Anschlussende 5 mit dem direkt anschließenden Teil der Leitung 3 sowie das Ablassende 7, dass aus einer Ablassöffnung 39 aus der aerodynamischen Verkleidung 37 herausragt. Der Abflussmast 1 verfügt zudem über ein Verbindungselement 41, mit dem eine elektrische Verbindung zu den in der Leitung 3 eingebetteten elektrischen Leitern 13 hergestellt werden kann, um diese mit Strom zu versorgen und die Leitung 3 zu beheizen. Die Leitung 3 und die aerodynamische Verkleidung 37 sind vorzugsweise aus einem Stück gefertigt, d.h., die aerodynamische Verkleidung 37 ist aus demselben Material gefertigt, wie die Leitung 3. Hierdurch kann verhindert werden, dass Wasser in die Verkleidung eindringt, was zu Beschädigungen führen kann. Zudem kann die Fertigung stärker automatisiert werden, was die Kosten senkt.

Schließlich zeigt Figur 6 ein Ausführungsbeispiel eines Flugzeugs 43 mit zwei Ausführungsbeispielen von Abflussmasten 1. Die Vorteile des Flugzeugs entsprechen den Vorteilen der darin verwendeten Abflussmasten 1.

## Patentansprüche

1. Abflussmast (1) für ein Flugzeug (43) zum Ablassen von Wasser aus dem Flugzeuginnern mit einer Leitung (3), die sich in einer Leitungsrichtung (9) von einem Anschlussende (5) zu einem Ablassende (7) erstreckt,
wobei das Anschlussende (5) zur Verbindung mit einer weiteren Leitung im Innern des Flugzeugs (43) vorgesehen ist, durch das Wasser in den Abflussmast (1) einströmt, und das Ablassende (7) zum Ablassen des Wassers in eine Umgebung des Flugzeugs (43) vorgesehen ist,
**dadurch gekennzeichnet, dass** die Leitung (3) aus einem Kunststoff gebildet ist, in den ein elektrisch leitfähiges Material (13) eingebettet ist, so dass diese aus einem Stück gebildet sind, wobei mittels des elektrisch leitfähigen Materials (13) die Leitung (3) elektrisch beheizt werden kann, indem ein Heizstrom durch das leitfähige Material (13) geleitet wird,
wobei ein Anteil des eingebetteten leitfähigen Materials (13) in der Leitung (3) in Leitungsrichtung (9) pro Längeneinheit vom Anschlussende (5) der Leitung (3) zum Abflussende (7) hin derart zunimmt, dass die in die Leitung (3) eingebrachte Heizleistung pro Längeneinheit vom Anschlussende (5) zum Ablassende (7) hin zunimmt.

2. Abflussmast (1) nach Anspruch 1, wobei das leitfähige Material (13) einen positiven Temperaturkoeffizienten aufweist.

3. Abflussmast (1) nach Anspruch 1, wobei das leitfähige Material (13) Kohlefasern umfasst.

4. Abflussmast (1) nach einem der vorhergehenden Ansprüche, wobei die Leitung (3) einen faserverstärkten Kunststoff umfasst.

5. Abflussmast (1) nach einem der Ansprüche 1 bis 3, wobei die Leitung (3) Polyetheretherketon, PEEK, umfasst.

6. Abflussmast (1) nach einem der vorhergehenden Ansprüche, wobei der Abflussmast (3) eine aerodynamische Verkleidung (37) mit einer Ablassöffnung (39) umfasst, wobei das Ablassende (7) der Leitung (3) in der Ablassöffnung (39) angeordnet ist.

7. Abflussmast (1) nach Anspruch 6, wobei die aerodynamische Verkleidung (37) und die Leitung (3) einstückig ausgebildet sind.

8. Flugzeug (43) mit einem Abflussmast (1) nach einem der vorhergehenden Ansprüche.

## Claims

1. Drain mast (1) for an aircraft (43) for discharging water from the aircraft interior by way of a line (3), said line extending in a line direction (9) from a connection end (5) to a discharge end (7),
wherein the connection end (5) is intended for connection to a further line in the interior of the aircraft (43), through which connection end water flows into the drain mast (1), and the discharge end (7) is intended for discharge of the water into surroundings of the aircraft (43),
**characterized in that** the line (3) is formed from a plastic into which an electrically conductive material (13) is embedded, so that these are formed from one piece, wherein, by means of the electrically conductive material (13), the line (3) can be heated electrically **in that** a heating current is conducted through the conductive material (13),
wherein a proportion of the embedded conductive material (13) in the line (3) increases in the line direction (9) per unit of length from the connection end (5) of the line (3) to the discharge end (7) in such a way that the heating power introduced into the line (3) per unit of length increases from the connection end (5) to the discharge end (7).

2. Drain mast (1) according to Claim 1, wherein the conductive material (13) has a positive temperature coefficient.

3. Drain mast (1) according to Claim 1, wherein the conductive material (13) comprises carbon fibres.

4. Drain mast (1) according to one of the preceding claims, wherein the line (3) comprises a fibre-reinforced plastic.

5. Drain mast (1) according to one of Claims 1 to 3, wherein the line (3) comprises polyether ether ketone (PEEK) .

6. Drain mast (1) according to one of the preceding claims, wherein the drain mast (3) comprises an aerodynamic fairing (37) with a discharge opening (39), wherein the discharge end (7) of the line (3) is arranged in the discharge opening (39).

7. Drain mast (1) according to Claim 6, wherein the aerodynamic fairing (37) and the line (3) are formed in one piece.

8. Aircraft (43) having a drain mast (1) according to one of the preceding claims.

## Revendications

1. Mât de drainage (1) pour un aéronef (43), destiné à évacuer l'eau de l'intérieur de l'aéronef, comprenant une conduite (3) qui s'étend dans une direction de conduite (9) depuis une extrémité de raccordement (5) jusqu'à une extrémité d'écoulement (7),
l'extrémité de raccordement (5) étant prévue pour être reliée à une conduite supplémentaire à l'intérieur de l'aéronef (43), à travers laquelle l'eau pénètre dans le mât de drainage (1), et l'extrémité d'écoulement (7) étant prévue pour évacuer l'eau dans l'environnement de l'aéronef (43),
**caractérisé en ce que** la conduite (3) est constituée d'une matière plastique dans laquelle est incorporé un matériau électriquement conducteur (13), de telle sorte qu'ils sont formés d'une seule pièce, la conduite (3) pouvant être chauffée électriquement au moyen du matériau électriquement conducteur (13) en faisant passer un courant de chauffage à travers le matériau conducteur (13),
une part du matériau conducteur (13) incorporé dans la conduite (3) dans la direction de la conduite (9) augmentant par unité de longueur de l'extrémité de raccordement (5) de la conduite (3) à l'extrémité d'écoulement (7), de telle sorte que la puissance de chauffage introduite dans la conduite (3) par unité de longueur augmente de l'extrémité de raccordement (5) à l'extrémité d'écoulement (7).

2. Mât de drainage (1) selon la revendication 1, le matériau conducteur (13) présentant un coefficient de température positif.

3. Mât de drainage (1) selon la revendication 1, le matériau conducteur (13) comprenant des fibres de carbone.

4. Mât de drainage (1) selon l'une des revendications précédentes, la conduite (3) comprenant une matière plastique renforcée de fibres.

5. Mât de drainage (1) selon l'une des revendications 1 à 3, la conduite (3) comprenant du polyétheréthercétone, PEEK.

6. Mât de drainage (1) selon l'une des revendications précédentes, le mât de drainage (3) comprenant un carénage aérodynamique (37) avec une ouverture d'écoulement (39), l'extrémité d'écoulement (7) de la conduite (3) étant disposée dans l'ouverture d'écoulement (39).

7. Mât de drainage (1) selon la revendication 6, le carénage aérodynamique (37) et la conduite (3) étant réalisés d'un seul tenant.

8. Aéronef (43) comprenant un mât de drainage (1) selon l'une des revendications précédentes.
